# EUROPEAN PATENT SPECIFICATION

(11) **EP 2 800 362 B1**
(45) Date of publication and mention of the grant of the patent: **27.03.2019**
(21) Application number: 12861482.3
(22) Date of filing: 19.11.2012
(51) Int. Cl.: H04N 5/765, G11B 20/10, G11B 27/00, G11B 27/10, G11B 27/34, H04N 5/91, H04N 7/173, H04N 21/4147, H04N 21/436, H04N 21/462, H04N 21/482, G11B 27/11, G11B 27/32, H04N 5/782, H04N 21/433, H04N 21/45, H04N 21/466

(54) **OUTPUT DEVICE ENABLING OUTPUT OF LIST INFORMATION FOR CONTENT STORED IN MULTIPLE DEVICES**
AUSGABEVORRICHTUNG ZUR AUSGABE VON LISTENINFORMATIONEN FÜR AUF MEHREREN VORRICHTUNGEN GESPEICHERTE INHALTE
DISPOSITIF DE SORTIE PERMETTANT LA DÉLIVRANCE EN SORTIE D'UNE LISTE DE DONNÉES POUR UN CONTENU STOCKÉ DANS UNE PLURALITÉ DE DISPOSITIFS

(30) Priority: 28.12.2011 JP 2011288042
(43) Date of publication of application: 05.11.2014
(73) Proprietor: Panasonic Corporation, Kadoma-shi, Osaka 571-8501 (JP)
(72) Inventor: SUZUKI, Yousuke, Osaka 540-6207 (JP); SASAKI, Takamitsu, Osaka 540-6207 (JP); TANIKAWA, Kentaro, Osaka 540-6207 (JP)
(74) Representative: Eisenführ Speiser
(86) International application number: PCT/JP2012/007418
(87) International publication number: WO 2013/099096

(56) References cited:
- EP-A1- 1 624 677
- EP-A1- 2 116 936
- JP-A- H11 317 937
- JP-A- 2002 209 154
- JP-A- 2003 018 515
- JP-A- 2003 018 515
- JP-A- 2005 044 104
- JP-A- 2007 159 098
- JP-A- 2008 244 961
- US-A1- 2005 027 673
- US-A1- 2007 043 740
- US-A1- 2007 077 038
- US-A1- 2010 097 356

## Description

### Technical Field

The present disclosure relates to an output device capable of outputting list information of contents stored in a plurality of devices.

### Background Art

US 2005/0027673 A1 discloses a digital content management apparatus which is capable of collectively displaying a list of content present on a network in an easy-to-use way. A content management server determines whether identical content is present when creating a display list of content managed by plural, different a audio video devices connected to the network. When identical content is present, the server creates a display list such that identical content is displayed according to designated conditions, such as in order of transmission speed of servers, based on a setting file.

EP 1624677 A1 discloses an apparatus and method for selectively recording a program reproduced from an input signal in a plurality of picture recorders, each of which is connected to enable input and output of information in a predetermined information transmission mode, wherein information indicating programs recorded in the plurality of picture recorders are displayed to be listed by a preset predetermined number dating back from the most recently recorded program.

JP 2009/88630 A discloses a digital recorder and a television set (TV). The digital recorder receives an instruction to record a program from the TV. The TV records a record history of the program for which it has provided the record instruction. The 'IV receives an instruction to reproduce the program recorded in the digital recorder from a user based on the record history. When receiving the reproduction instruction for the program from the user, the TV sends a reproduction instruction command for the program to the digital recorder. The digital recorder reproduces the program according to the received reproduction instruction command. With such a configuration, the user can reproduce the program recorded in the external digital recorder by operating the TV.

### Summary of Invention

### Problems to be solved by the Invention

The digital recorder disclosed in JP 2009/88630 A outputs image data representing a list of recorded programs to the TV. It is more preferable to display the list of recorded programs more quickly. Therefore, it is desirable to generate the list of recorded programs at high speed in the digital recorder.

Now, such a situation is assumed that a list of program data which are recorded in a plurality of apparatuses is created. In this case, one of the apparatuses which is to create a list of program data (a recorded program list) needs to acquire information of the program data (title information) recorded in other apparatuses from the other apparatuses. However, it generally requires time to acquire the information of the program data from the other apparatuses. Thus it takes a lot of time for the list of recorded programs to be displayed, which degrades the convenience of the user.

The present disclosure has an object of providing an output device which acquires information of recorded programs from other apparatuses such as a digital recorder, generates and outputs data representing a list of recorded programs, and which does not degrade user convenience (i.e., the output device by which user hardly has an impression that it takes a long time in generating the list of recorded programs).

### Means for solving the problem

An output device of the present disclosure includes a communication unit that acquires identification information from a plurality of external apparatuses, the identification information identifying data recorded in each one of the plurality of external apparatuses; a controller that controls the communication unit, an output unit that outputs information represented by the identification information which is acquired by the communication unit, and an operation unit that receives an instruction from a user. While the communication unit is serially acquiring the identification information from each one of the plurality of external apparatuses, the output unit is configured to update information to be output each time the communication unit completes acquiring the identification information from a predetermined number of external apparatuses, the information to be output being represented by identification information that has already been acquired from the predetermined number of external apparatuses, wherein when an instruction to reproduce the data recorded in one of the predetermined number of external apparatuses for which the identification information has already been acquired is received from the user via the operation unit while the communication unit is acquiring the identification information from the external apparatus, for which the identification information is not completely acquired, the controller controls the communication unit to stop acquiring of the identification information.

### Effects of the Invention

According to the present disclosure, an output device which hardly cause a user to have an impression that it takes a long time for the apparatus to create information represented by identification information which identifies data recorded in a plurality of apparatuses can be provided.

### Brief Description of Drawings

Fig. 1 is a schematic diagram for describing the whole system;
Fig. 2 is a block diagram for describing a configuration of a recorder 100;
Fig. 3 is a flow chart for describing an operation (manual operation) of generating data which represents a recorded program list in the recorder 100;
Fig. 4A is a schematic diagram illustrating a display example of the recorded program list in the recorder 100;
Fig. 4B is a schematic diagram illustrating a display example of the recorded program list in the recorder 100;
Fig. 5 is a schematic diagram illustrating a display example
Fig. 6 is a schematic diagram illustrating a display example of the recorded program list in the recorder 100;
Fig. 7 is a schematic diagram illustrating a display example of the recorded program list in the recorder 100;
Fig. 8 is a schematic diagram illustrating a display example of the recorded program list in the recorder 100;
Fig. 9 is a flow chart for describing a reproduction operation on program data in the recorder 100; and
Fig. 10 is a flow chart for describing an operation (automatic operation) of generating data which represents a recorded program list in the recorder 100.

### Mode for Carrying Out the Invention

Embodiments will be described below in detail with reference to the drawings as required. However, unnecessarily detailed description may be omitted. For example, detailed description of already well-known matters and repetition of substantially the same configuration may be omitted. This is because understanding by those skilled in the art is facilitated and the following description is prevented from becoming unnecessarily redundant.

The inventor(s) provide the attached drawings and the following description for those skilled in the art to fully understand the present disclosure and does not intend to limit the subject described in the claims by the attached drawings and the following description.

A first embodiment in which a concept of the present disclosure is applied to a recorder will be described with reference to the drawings.

### 1. First Embodiment

### 1-1. Outline

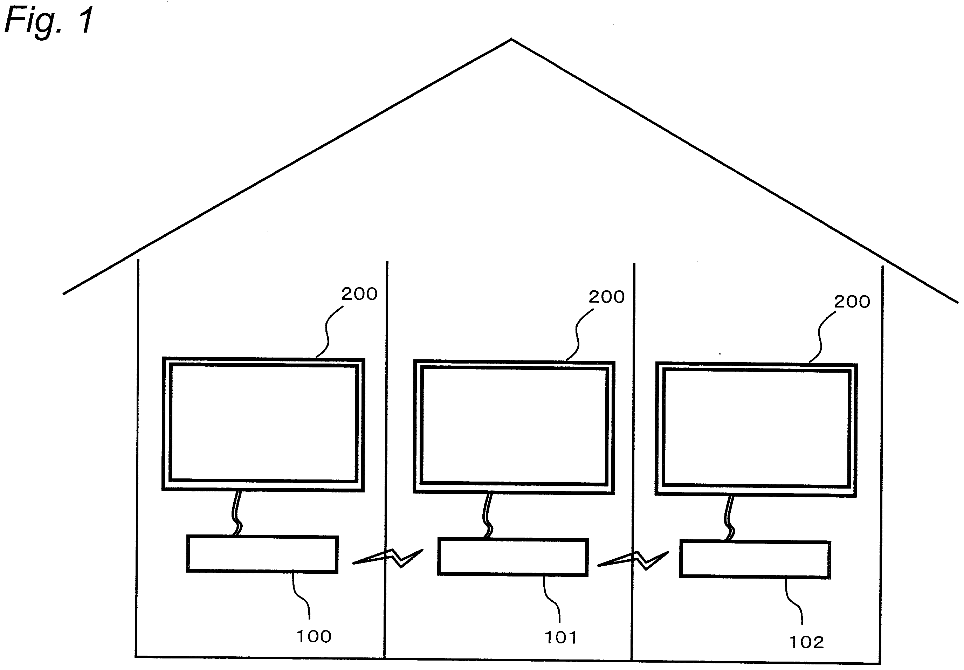

A system including a recorder of the present embodiment will be outlined with reference to Fig. 1. Fig. 1 is a schematic diagram illustrating an outline of the whole system. In this system, a plurality of recorders 100, 101, and 102 are connected to a residential LAN. Each of the recorders 100, 101, and 102 has program data recorded in a recording medium such as an HDD. One recorder 100 is capable of acquiring the program data recorded in the other recorders 101 and 102 and outputting the data to a TV 200 to cause the data to be displayed on the TV 200, through the residential LAN. Further, the recorder 100 acquires a list of title information of the program data recorded in the other recorders 101 and 102 (a recorded program list) and outputs the acquired list of title information to the TV 200.

The recorder 100 is capable of displaying the list of the title information for identifying the program data recorded in the other recorders 101 and 102 on the TV 200 at relatively high speed.

### 1-2. Configuration of Recorder

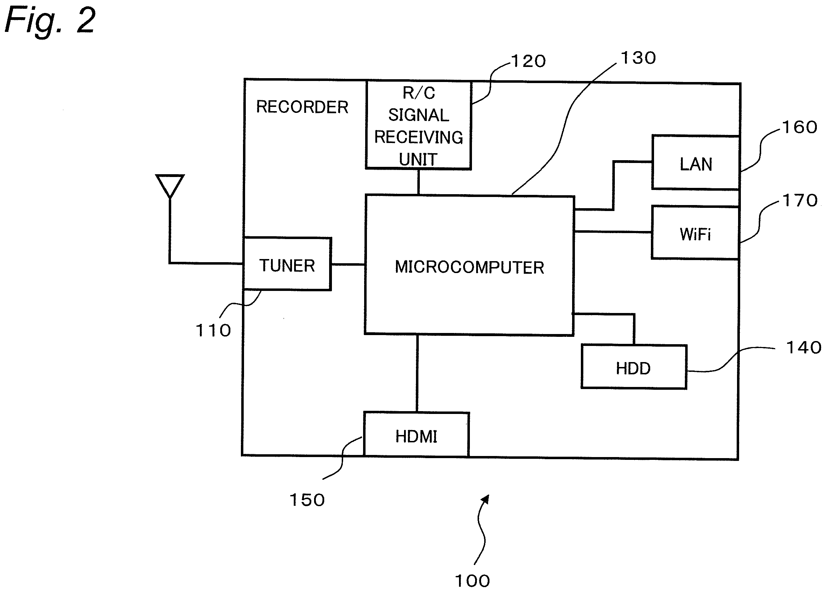

A configuration of the recorder 100 will be described with reference to Fig. 2. Fig. 2 is a block diagram illustrating a configuration of the recorder 100. The recorder 100 is a video recorder capable of recording video data. The recorder 100 generates program data by performing respective types of processing by means of a microcomputer 130 on a broadcast received via a tuner 110, and records the generated program data in an HDD 140. The recorder 100 sends the program data recorded in the HDD 140 to an external device via an HDMI 150 or a wireless communication module 170. Details of each structure of the recorder 100 will be described below.

The tuner 110 extracts a radio wave for a channel selected by the user from among radio waves received by an antenna. Based on the extracted radio wave, the tuner 110 generates digital data which can be processed by the microcomputer 130.

A remote control signal receiving unit 120 receives a control signal (an instruction from the user) which is modulated into an infrared ray signal or a RF wave signal and sent from a remote controller operated by the user. For example, the remote control signal receiving unit 120 receives a control signal to power ON/OFF, to switch the channel, or to start/stop of recording. The remote control signal receiving unit 120 converts the received control signal into a digital signal which can be interpreted by the microcomputer 130.

The microcomputer 130 is a control module for controlling the whole operation of the recorder 100. The microcomputer 130 is implemented by an SOC (System On Chip). Therefore, the microcomputer 130 includes a CPU, a memory and a data signal processing circuit which are integrated together.

The HDD 140 is a data storage for storing moving image data and the like. The HDD 140 stores data such as program data which represents a broadcast program received via the tuner 110.

The HDMI 150 is an interface for connecting the recorder 100 with an external device such as the TV 200. The recorder 100 outputs a video signal represented by the program data recorded in the HDD 140 to the external device via the HDMI 150. For example, the recorder 100 outputs a video signal represented by the program data to the TV 200 which is a video display apparatus so that the TV 200 displays a video image based on the video signal.

A wired LAN module 160 is an interface capable of connecting a wired LAN cable.

A wireless communication module 170 is a communication module capable of implementing wireless LAN communications. The wireless communication module 170 complies with "IEEE 802.11", an international standard of wireless LAN communications. The wireless communication module 170 is capable of communicating with the external device and the like through an access point with IP (Internet Protocol). Further, the wireless communication module 170 is capable of directly communicating with the external device without the access point.

The recorder 100 is capable of connecting with a network via the wired LAN module 160 and the wireless communication module 170, so that the recorder 100 is capable of exchanging data with the device connected with the network.

The recorder 100 with the above described configuration is capable of reproducing program data recorded in the other devices (the recorders 101 and 102 and the like) on the network. For that purpose, the recorder 100 acquires a list of title information of the program data recorded in the other devices on the network from the other devices, generates image data representing a recorded program list based on the list of title information, and outputs the image data to the TV 200. The TV 200 displays the recorded program list. When one program (title) is selected by the user through the displayed recorded program list, the recorder 100 reproduces the selected program. The recorded program list is manually or automatically updated in the recorder 100.

### 1-3. Manual Update Operation on recorded Program List

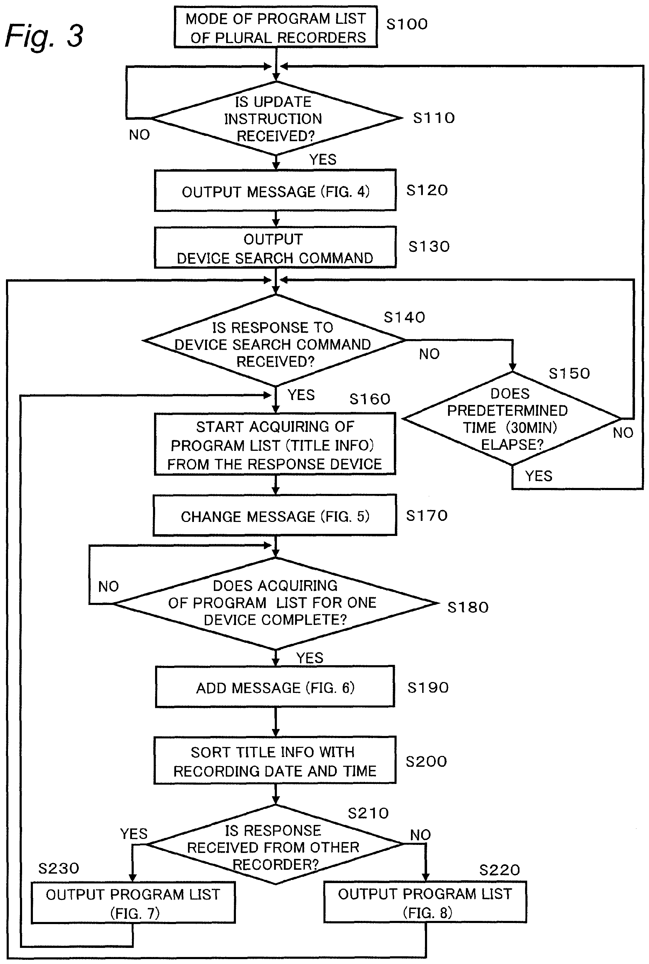

A manual update operation on the recorded program list in the recorder 100 will be described with reference to the flow chart shown in Fig. 3.

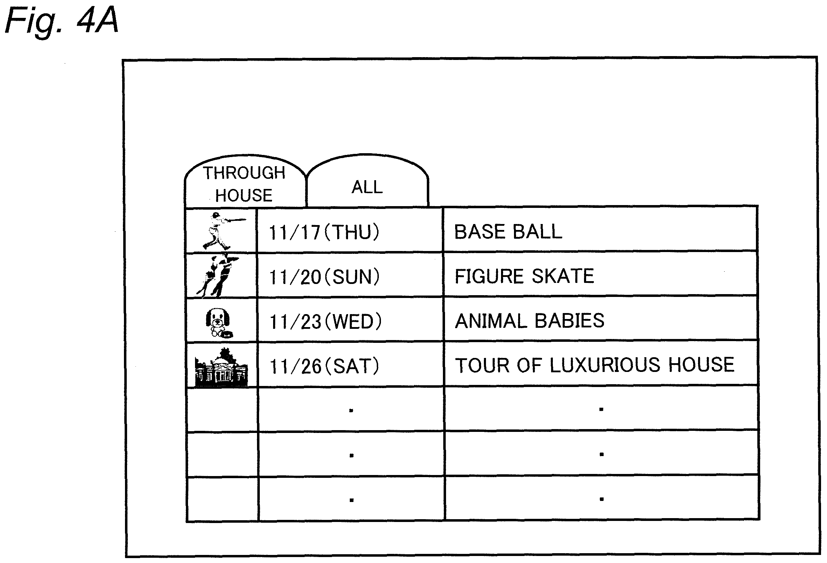

The recorder 100 causes the TV 200 to display the recorded program list which represents the list of program data recorded in the plurality of recorders based on an instruction to display the recorded program list provided by a user operation on the remote controller (S100). Fig. 4A illustrates an example of the recorded program list displayed on the TV 200. The recorded program list illustrated in Fig. 4A has two tags of "THROUGH HOUSE" and "ALL". When the tag "THROUGH HOUSE" is selected, the recorded program list is displayed with respect to the programs recorded in all devices (recorders and the like) installed in the house other than the recorder 100. On the other hand, when the tag "ALL" is selected, the recorded program list is displayed with respect to all of the programs recorded in the recorder 100.

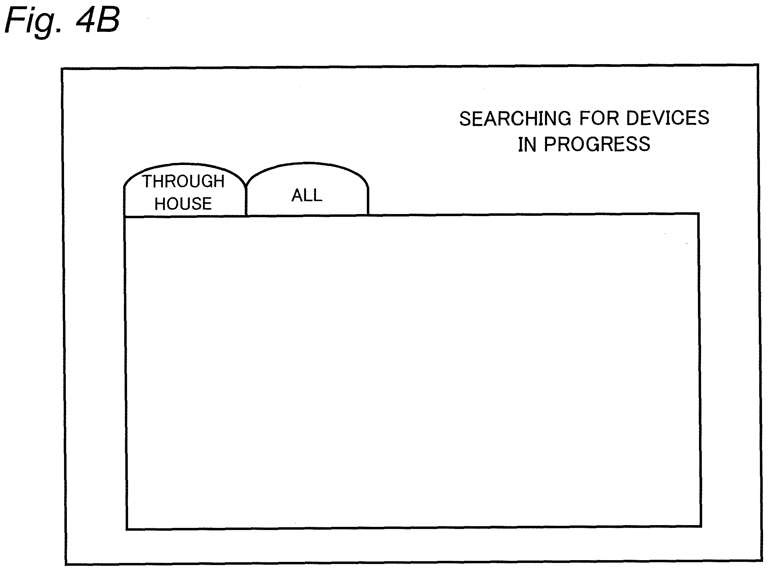

Then, the microcomputer 130 of the recorder 100 waits for an instruction to update the recorded program list provided by a user operation (S110). When receiving the instruction to update the recorded program list provided by the user, the microcomputer 130 deletes all the title information recorded in the HDD 140 and also displays the recorded program list including a message illustrated in Fig. 4B ("SEARCHING FOR DEVICES IN PROGRESS") (S120). Further, the microcomputer 130 sends a device search command by multicast via the wired LAN module 160 or the wireless communication module 170 (S130), and waits for a response to the device search command from the other devices (S140).

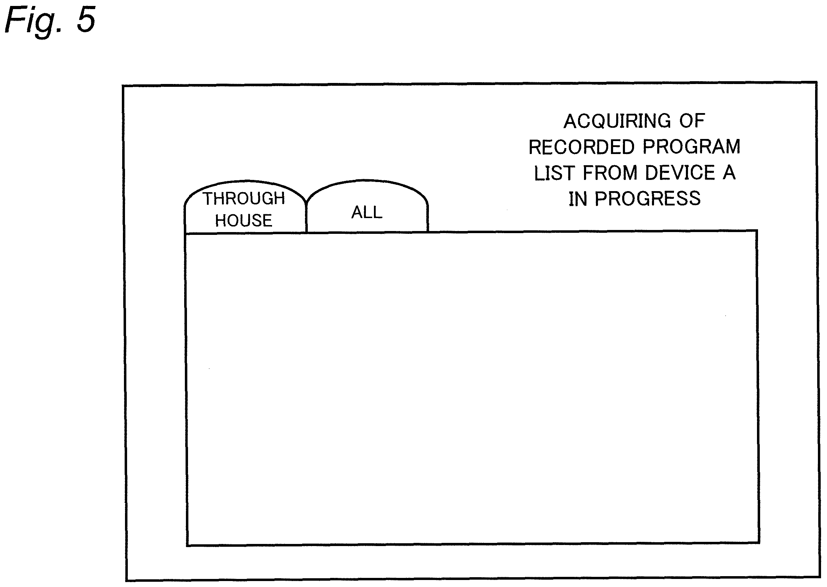

When receiving a response from a device (in this example, a recorder), the recorder 100 starts acquisition of the title information with respect to all the programs recorded in the device from which the response is received (hereinafter, referred to as "device A") (S160) and changes the message displayed on the recorded program list. Specifically, the recorder 100 updates the message displayed on the recorded program list from the message illustrated in Fig. 4B ("SEARCHING FOR DEVICES IN PROGRESS") to a message illustrated in Fig. 5 ("ACQUIRING OF RECORDED PROGRAM LIST FROM DEVICE A IN PROGRESS") (S170) .

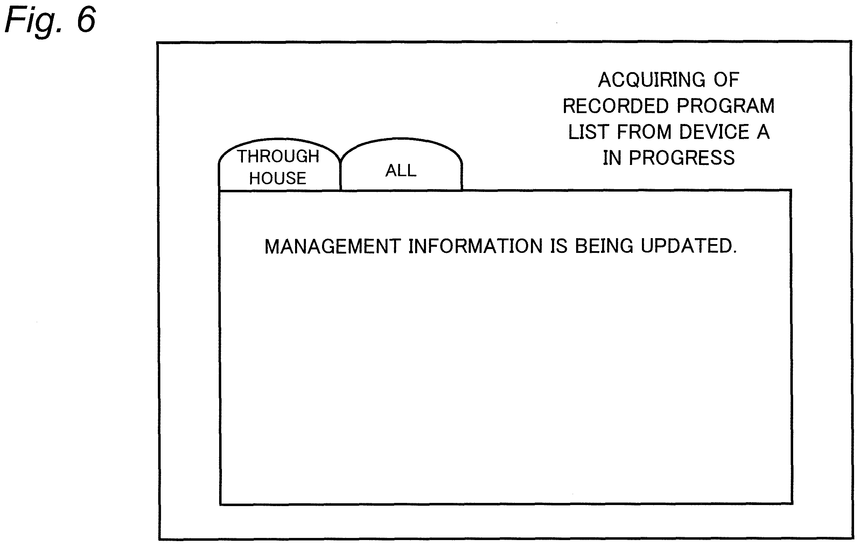

The microcomputer 130 of the recorder 100 keeps acquiring the title information until it acquires all the title information in the device A while recording all of the acquired title information into the HDD 140. When the microcomputer 130 completes the acquisition of the title information from the device A (YES in S180), the microcomputer 130 outputs display data to the TV 200 so that a message telling that management information is being updated as illustrated in Fig. 6 is displayed in the recorded program list (S190). Then, the microcomputer 130 updates the management information of the title information recorded in the HDD 140. Subsequently, the microcomputer 130 sorts the title information recorded in the HDD 140 in ascending order of the recording date and time (S200) and causes the sorted title information to be displayed in the recorded program list. After the above described process, the microcomputer 130 determines whether a response to the device Search command is received from the other device (S210).

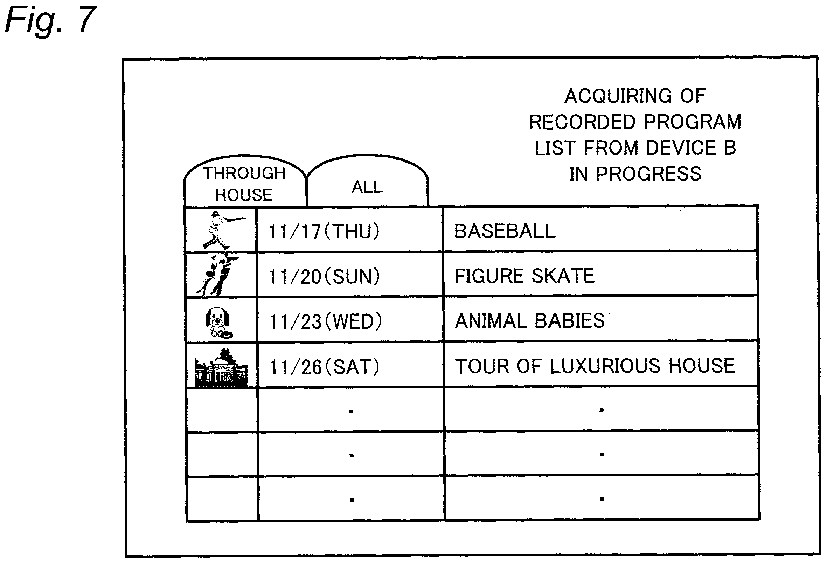

When the response to the device search command is returned from the other device (here, referred to as "device B") (YES in S210), the microcomputer 130 displays a message telling that the recorded program list is being acquired from the other device B (see Fig. 7) in the recorded program list (S230) and performs the processes of steps S160 to S210 on the device.

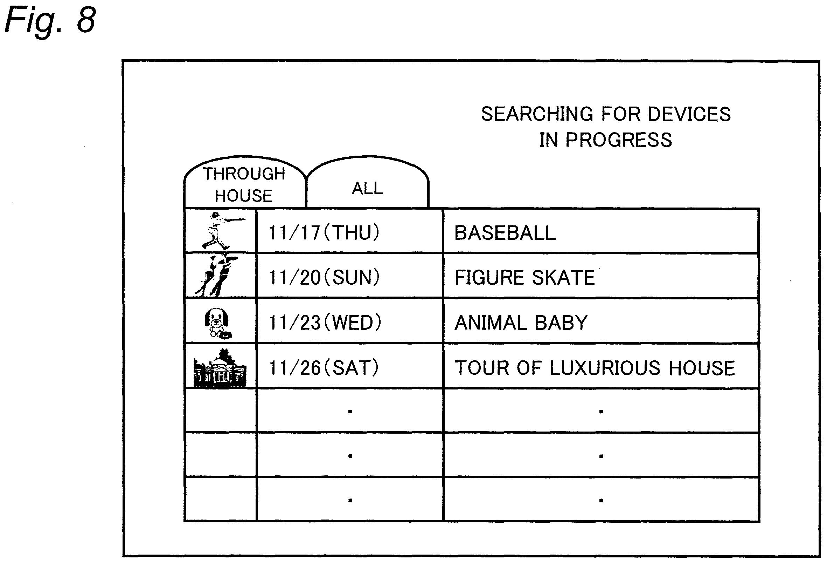

On the other hand, when no response to the device search command is returned from the other device (NO in S210), the microcomputer 130 displays a message telling that devices are being searched in the recorded program list (see Fig. 8) (S230) and returns to step S140.

When no response to the device search command is received even when a predetermined period of time (for example, 30 seconds) passes after the device search command is sent by multicast (step S130) (YES in S150), the microcomputer 130 finishes the update processing of the recorded program list.

As described above, the recorder 100 acquires the title information for each device which has responded to the device search command, updates the recorded program list each time it has acquired the title information for one of the devices, sorts the title information in ascending order of a predetermined condition (here, the recording date and time), and displays the sorted title information. As a result, the user does not need to wait until the title information is completely acquired from all of the devices, and therefore, the user can use the recorder 100 without feeling that the recorder 100 is taking a long time in updating the list.

### 1-4. Reproduction Operation on Recorded Program in Manual Update

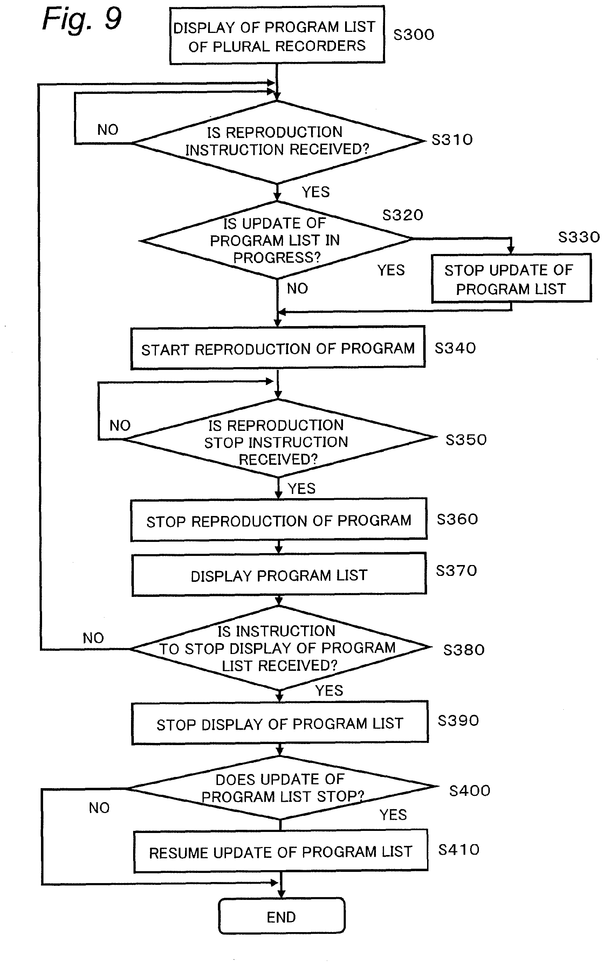

A reproduction operation performed during the manual update of the recorded program list in the recorder 100 will be described with reference to the flow chart of Fig. 9.

According to an instruction provided by a user operation, the microcomputer 130 of the recorder 100 causes the TV 200 to display the recorded program list for each of the plurality of recorders (S300). Then, the microcomputer 130 waits for an instruction to reproduce an optional program provided by a user operation (S310). When the microcomputer 130 receives the reproduction instruction, the microcomputer 130 determines whether the recorded program list is being updated or not (S320) . When the recorded program list is being updated (YES in S320), the microcomputer 130 stops (interrupts) the update processing of the recorded program list (S330), then, acquires data for the program related to the received reproduction instruction from the device (recorder or the like) which stores such program data via the wired LAN module 160 or the wireless communication module 170, and starts the reproduction (S340). On the other hand, when the recorded program list is not being updated (NO in S320), the microcomputer 130 starts the reproduction of the program related to the received reproduction instruction (S340).

When an instruction to stop the reproduction is provided by user operation afterward (YES in S350), the microcomputer 130 stops reproducing the program (S360), and displays the recorded program list again (S370).

Further, when an instruction to reproduce another program is provided by user operation on the recorded program list, the microcomputer 130 performs the processes described in steps S340 to S370. When an instruction to finish the recorded program list is provided by user operation after the reproduction is stopped (YES in S380), the microcomputer 130 finishes displaying of the recorded program list (S390). When the update of the recorded program list previously stops (interrupted) in step S330 at that moment (YES in S400), the microcomputer 130 resumes the update of the recorded program list (S410).

As described above, when the recorder 100 starts the reproduction during the update of the recorded program list, the recorder 100 temporarily stops (interrupts) the update of the recorded program list, and resumes the update of the recorded program list after finishing of displaying the recorded program list, i.e., after stopping of reproduction of the program data. Therefore, even when the recorder 100 is provided with low performance microcomputer, wired LAN module, and wireless communication module which do not have ability of performing the update of the recorded program list simultaneously with the reproduction of the program, the recorder 100 is capable of performing each of the update of the recorded program list and the reproduction of the program. That is, the user can provide an instruction to reproduce a program without worrying about whether or not the recorder 100 is updating the list.

### 1-5. Automatic Update Operation on Recorded Program List

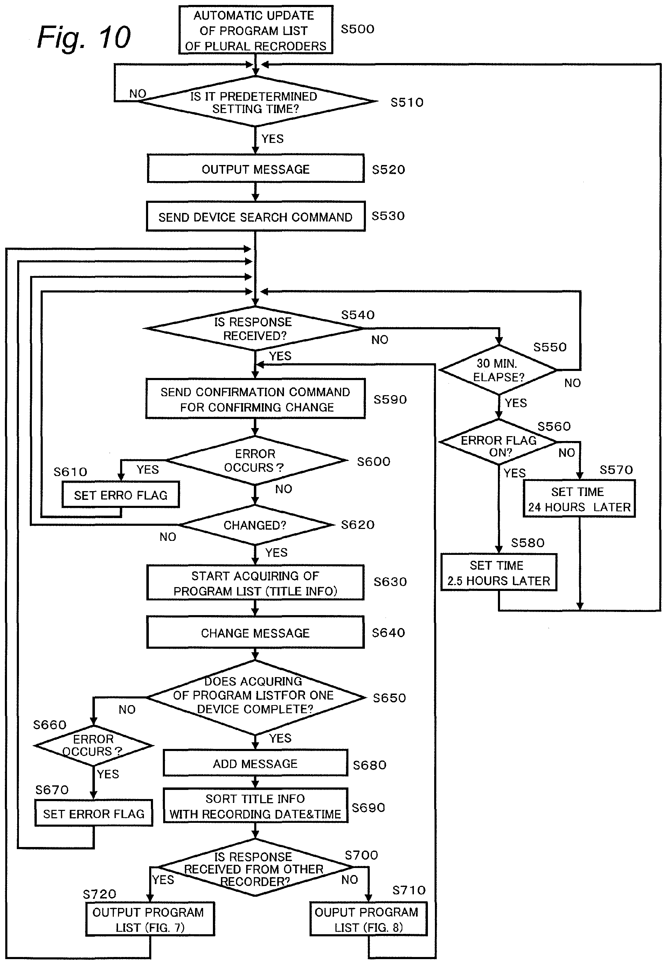

An automatic update operation on the recorded program list in the recorder 100 will be described with reference to the flow chart shown in Fig. 10.

When the automatic update on the recorded program list of the plurality of recorders is set in accordance with an instruction provided by a user operation (S500), the recorder 100 starts the update of the recorded program list at a preset time of day (S510 to S720).

First, the microcomputer 130 of the recorder 100 displays a message as illustrated in Fig. 8 ("SEARCHING FOR DEVICES IN PROGRESS") in the recorded program list (S520), and sends the device search command by multicast via the wired LAN module 160 or the wireless communication module 170 (S530). The microcomputer 130 waits for a response to the device search command from the other devices (S540).

When the microcomputer 130 receives a response from one of the devices (here, "device A"), the microcomputer 130 sends a confirmation command for confirming whether the recorded program list has been changed or not to the device A (S590). The confirmation command is a command for confirming whether or not the recorded program list (i.e., the title information of the program data recorded in the device) has changed in the device since the recorded program list is previously acquired.

When the recorded program list of the device A has been changed, the device A sends a response indicating that the recorded program list of the device A has been changed, to the recorder 100. When the microcomputer 130 receives the response indicating that the recorded program list has been changed (YES in S620), the microcomputer 130 deletes all the title information previously acquired from the device A and recorded in the HDD 140, and then, starts acquisition of the title information from the device A (S630). The microcomputer 130 changes the message displayed on the recorded program list from the message telling " SEARCHING FOR DEVICES IN PROGRESS" (see Fig. 8) to a message telling "ACQUIRING OF RECORDED PROGRAM LIST FROM DEVICE A IN PROGRESS" (see Fig. 5) (S640).

When an abnormality such as a communication error occurs in sending the confirmation command for confirming change of the recorded program list or in receiving a response from the device A (YES in S600), the microcomputer 130 sets a value of an error flag to 1 (S610) . Here, the initial value of the error flag is 0. The microcomputer 130 keeps acquiring the title information until it acquires all of the title information in the device A while recording all of the acquired title information into the HDD 140. Then, the microcomputer 130 performs the same processes (S650 to S710) as those in steps S180 to S240 shown in Fig. 3. In the processes shown in Fig. 10, the presence or absence of abnormality is further monitored with respect to completion of the acquisition of the recorded program list (title information) from each device (S650, S660) . When the acquisition of the recorded program list (title information) is not normally completed for one of the devices due to such a reason as a communication error (NO in S650 and YES in S660), the microcomputer 130 sets a value of the error flag to 1 (S670).

When a response to the device search command is not received even when a predetermined period of time (for example, 30 seconds) passes after the device search command is sent (step S530) (YES in S550), the microcomputer 130 finishes this processing (update processing) and determines the value of the error flag (S560). When the value of the error flag is 1 (ON), the microcomputer 130 sets the start time of the next automatic update to a time 2.5 hours later than the currently set start time (S580), but when the value of the error flag is 0 (OFF), sets the start time of the automatic update to a time 24 hours later than the currently set start time (S570).

As described above, the recorder 100 automatically updates the recorded program list (the list of the acquired title information) on a cycle of 24 hours. When an abnormality is detected in the update processing, the recorder 100 performs the automatic update after 2.5 hours of the currently set start time again. As a result, the user needs not to bother to manually instruct the recorder 100 to perform the update of the recorded program list, so that, the user can use the recorded program list without concern about the time-consuming the update processing of the recorded program list. In the automatic update, the recorder 100 checks the devices for whether the recorded program list is changed or not and does not acquire the recorded program list from the device of which recorded program list is not changed. Therefore, the recorder 100 can complete the update processing of the recorded program list in a short time.

### 1-6. Effects and the like

The recorder 100 of the present embodiment includes a communication unit (the wired LAN module 160, the wireless communication module 170) for acquiring the title information (information of the recorded program list) which identifies the program data recorded in the other devices (the recorders 101, 102, etc.), and an output unit (a structure including the microcomputer 130 and HDMI 150) for outputting information represented by the title information which is acquired by the communication unit (i.e., the information composing the recorded program list). While the communication unit is acquiring the title information (the information composing the recorded program list) from the plurality of devices, the output unit outputs the information represented by the already acquired title information (the information composing the recorded program list) (see Fig. 7 and Fig. 8) each time the communication unit completes acquiring the title information (the information forming the recorded program list) from each device.

With that configuration, the recorded program list is displayed each time the acquisition of information of the title information (information of the recorded program list) from each device completes. As a result, even when the title information (information of the recorded program list) is acquired from the plurality of devices, the user does not need to wait until all pieces of the information are acquired from all of the devices, so that the user can use the recorder 100 without feeling that the recorder 100 is taking a long time in updating the recorded program list.

Further, when the communication unit acquires the title information (information of the recorded program list) from the plurality of devices, the microcomputer 130 may sort the information represented by the title information (information of the recorded program list) according to a predetermined condition each time the communication unit acquires the information from each device. The microcomputer 130 may output the sorted title information (information of the recorded program list) to the TV.

The microcomputer 130 may be configured to acquire the title information (information of the recorded program list) from the device, when the program data recorded in the device is changed after the previous acquisition of the title information (information of the recorded program list). On the other hand, the microcomputer 130 may be configured not to acquire information of the title information (information of the recorded program list) from the device, when the program data recorded in the device is not changed after the previous acquisition of the data. With that configuration, the recorded program list can be acquired only when the recorded program list needs to be updated, so that it can prevent unnecessary implementation of the processing.

Further, in a case where the microcomputer 130 (an example of the controller) receives an instruction to reproduce the program data recorded in the output device from the user via the operation unit (for example, the remote control signal receiving unit 120) while acquiring the title information (information of the recorded program list) from the device, the microcomputer 130 controls the communication unit to stop acquiring the title information (information of the recorded program list) . With that configuration, the load of the microcomputer 130 can be reduced upon receiving the instruction to reproduce the program data during the update of the recorded program list.

The microcomputer 130 may acquire the title information from the plurality of devices periodically at predetermined time interval. In that case, the predetermined time interval may be set to different values according to whether or not an abnormality occurs in the operation of acquiring the title information (S560 to 580). As a result, when an abnormality occurs, the interval between the update processes of the recorded program list can be shorter, so that the recorded program list can be corrected more promptly.

### 2. Other embodiments

As described above, the first embodiment has been described as an example of the technology disclosed in the present application. However, the technology in the present disclosure is not limited to that embodiment and may also be applied to embodiments subjected to modifications, substitutions, additions, or omissions as required. Also, the respective constituent elements described in the first embodiment may be appropriately combined to form a new embodiment. The other embodiments will be exemplified below.

Although the recorder 100 is described as an example of the output device in the first embodiment, the output device is not limited to that. The concept of the above described embodiment can be applied to any apparatus as far as it can acquire list information of recorded video data from a plurality of devices which record the video data and can reproduce the video data recorded in the respective devices. Therefore, for example, TVs and information processing apparatuses are also included in the output device as far as they have the above described functions.

Although the user operation is received via a remote controller in the first embodiment, the user operation may be received via an operation button provided on the recorder body.

Although the program data received from a broadcast station has been described as an example of the contents recorded in the recorder in the first embodiment, the type of contents is not limited to that. The concept of the present disclosure can also be applied to the contents other than the program data such as audio data, still image data, video data which is taken by the user. That is, the concept of the present disclosure can also be applied to the configuration which has the contents recorded in a plurality of devices and causes data representing a list of the contents recorded in the respective devices to be acquired from the devices.

Operations in the acquisition of information for generating the recorded program list have been described in the first embodiment. However, the concept of the present disclosure can be applied to the processes in the acquisition of any information as far as the information is related to the contents stored in the devices and can be acquired from the plurality of devices and displayed.

Although the recorded program list is updated each time the title information has been acquired from one of the devices in the first embodiment (S180 to S230), the recorded program list may be updated each time the title information has been acquired from a predetermined number of the devices. For example, the recorded program list may be updated each time the title information has been acquired from two or three of the devices.

Although the title information is sorted in ascending order of the recording date and time in the first embodiment, the title information may be sorted in descending order. Alternatively, the sort may be implemented on the basis of the title and a condition of unviewed/viewed.

It is needless to say that the above described communication interfaces (LAN, HDMI, etc.) are examples and other communication interfaces may also be used.

### Industrial Applicability

The present disclosure can be applied to an output device such as a recorder which has a function of acquiring identification information from a plurality of devices and a TV.

## Claims

1. An output device (100) comprising:
a communication unit (160, 170) that acquires identification information from a plurality of external apparatuses (101, 102), the identification information identifying data recorded in each one of the plurality of external apparatuses (101, 102);
a controller (130) that controls the communication unit (160, 170);
an output unit (130, 150) that outputs information represented by the identification information which is acquired by the communication unit (160, 170), and
an operation unit (120) that receives an instruction from a user,
**characterized in that**,
while the communication unit (160, 170) is acquiring the identification information from each one of the plurality of external apparatuses (101, 102), the output unit (130, 150) is configured to update information to be output each time the communication unit (160, 170) completes acquiring the identification information from a predetermined number of external apparatuses (101, 102), the information to be output being represented by identification information that has already been acquired from the predetermined number of external apparatuses,
wherein when an instruction to reproduce the data recorded in one of the predetermined number of external apparatuses (101, 102) for which the identification information has already been acquired is received from the user via the operation unit (120) while the communication unit (160, 170) is acquiring the identification information from the external apparatus (101, 102), for which the identification information is not completely acquired, the controller (130) controls the communication unit (160, 170) to stop acquiring of the identification information.

2. The output device (100) according to claim 1, further comprising a sort unit that sorts the information represented by the identification information according to a predetermined condition each time the communication unit (160, 170) completes acquiring the identification information from each one of the plurality of external apparatuses (101, 102), in a case where the communication unit (160, 170) acquires the identification information from the plurality of external apparatuses (101, 102),
wherein the output unit (130, 150) outputs the information represented by the identification information after the information is sorted by the sort unit.

3. The output device (100) according to claim 1 or 2, wherein the communication unit (160, 170)
acquires the identification information from one of the plurality of external apparatuses (101, 102) in a case where the data recorded in said one of the plurality of external apparatuses (101, 102) is changed after previous acquisition of the data, and
does not acquire the identification information from one of the plurality of the external apparatuses (101, 102) in a case where the data recorded in said one of the plurality of external apparatuses (101, 102) is not changed after the previous acquisition of the data.

4. The output device (100) according to claim 1, wherein the controller (130) controls the communication unit (160, 170) to resume the acquisition of the identification information after finish of the reproduction of the data on the basis of the instruction.

5. The output device (100) according to anyone of claims 1 to 4, wherein the output unit (130, 150) acquires the identification information from the plurality of external apparatuses (101, 102) periodically at predetermined time interval, and
the predetermined time interval is set to different values according to whether or not an abnormality occurs in an operation of acquiring the identification information.

6. The output device (100) according to anyone of claims 1 to 5, wherein the identification information represents a title of a broadcast program recorded in one of the plurality of external apparatuses (101, 102).

7. The output device (100) according to anyone of claims 1 to 6, wherein the output device is a video recorder capable of recording video data.

## Patentansprüche

1. Ausgabevorrichtung (100), Folgendes umfassend:
eine Kommunikationseinheit (160, 170), die Identifikationsinformationen von einer Vielzahl von externen Vorrichtungen (101, 102) erfasst, wobei die Identifikationsinformationen Daten identifizieren, die in jeder der Vielzahl von externen Vorrichtungen (101, 102) aufgezeichnet sind;
eine Steuerung (130), welche die Kommunikationseinheit (160, 170) steuert;
eine Ausgabeeinheit (130, 150), die Informationen ausgibt, welche durch die Identifikationsinformationen dargestellt werden, die durch die Kommunikationseinheit (160, 170) erfasst werden, und
eine Betriebseinheit (120), die eine Anweisung von einem Benutzer empfängt,
**dadurch gekennzeichnet, dass**,
während die Kommunikationseinheit (160, 170) die Identifikationsinformationen von jeder der Vielzahl von externen Vorrichtungen (101, 102) erfasst, die Ausgabeeinheit (130, 150) konfiguriert ist, um Informationen zu aktualisieren, die jedes Mal ausgegeben werden sollen, wenn die Kommunikationseinheit (160, 170) das Erfassen der Identifikationsinformationen von einer vorbestimmten Anzahl von externen Vorrichtungen (101, 102) abschließt, wobei die auszugebenden Informationen durch Identifikationsinformationen dargestellt werden, die bereits von der vorbestimmten Anzahl von externen Vorrichtungen erfasst wurden,
wobei, wenn ein Befehl zum Wiedergeben der in einer der vorbestimmten Anzahl von externen Vorrichtungen (101, 102) aufgezeichneten Daten, für welche die Identifikationsinformationen bereits erfasst wurden, vom Benutzer über die Betriebseinheit (120) empfangen wird, während die Kommunikationseinheit (160, 170) die Identifikationsinformationen von der externen Vorrichtung (101, 102) erfasst, für welche die Identifikationsinformationen nicht vollständig erfasst werden, die Steuerung (130) die Kommunikationseinheit (160, 170) steuert, um das Erfassen der Identifikationsinformationen zu beenden.

2. Ausgabevorrichtung (100) nach Anspruch 1, ferner umfassend eine Sortiereinheit, welche die durch die Identifikationsinformationen dargestellten Informationen gemäß einer vorbestimmten Bedingung jedes Mal sortiert, wenn die Kommunikationseinheit (160, 170) das Erfassen der Identifikationsinformationen von jeder der Vielzahl von externen Vorrichtungen (101, 102) abschließt, in einem Fall, in dem die Kommunikationseinheit (160, 170) die Identifikationsinformationen von der Vielzahl von externen Vorrichtungen (101, 102) erfasst,
wobei die Ausgabeeinheit (130, 150) die durch die Identifikationsinformationen dargestellten Informationen ausgibt, nachdem die Informationen durch die Sortiereinheit sortiert wurden.

3. Ausgabevorrichtung (100) nach Anspruch 1 oder 2, wobei die Kommunikationseinheit (160, 170)
die Identifikationsinformationen von einer der Vielzahl von externen Vorrichtungen (101, 102) in einem Fall erfasst, in dem die Daten, die in der einen der Vielzahl von externen Vorrichtungen (101, 102) aufgezeichnet sind, nach dem vorherigen Erfassen der Daten geändert werden, und
die Identifikationsinformationen von einer der Vielzahl der externen Vorrichtungen (101, 102) nicht erfasst, in einem Fall, in dem die Daten, die in der einen der Vielzahl der externen Vorrichtungen (101, 102) aufgezeichnet sind, nach dem vorherigen Erfassen der Daten nicht geändert werden.

4. Ausgabevorrichtung (100) nach Anspruch 1, wobei die Steuerung (130) die Kommunikationseinheit (160, 170) steuert, um das Erfassen der Identifikationsinformationen nach Beendigung der Wiedergabe der Daten auf der Grundlage des Befehls fortzusetzen.

5. Ausgabevorrichtung (100) nach einem der Ansprüche 1 bis 4, wobei die Ausgabeeinheit (130, 150) die Identifikationsinformationen von der Vielzahl der externen Vorrichtungen (101, 102) periodisch in einem vorbestimmten Zeitintervall erfasst, und
das vorgegebene Zeitintervall auf unterschiedliche Werte eingestellt ist, je nachdem, ob bei einem Vorgang zum Erfassen der Identifikationsinformationen eine Anomalie auftritt oder nicht.

6. Ausgabevorrichtung (100) nach einem der Ansprüche 1 bis 5, wobei die Identifikationsinformation einen Titel eines Rundfunkprogramms darstellt, das in einer der Vielzahl von externen Vorrichtungen (101, 102) aufgezeichnet ist.

7. Ausgabevorrichtung (100) nach einem der Ansprüche 1 bis 6, wobei die Ausgabevorrichtung ein Videorekorder ist, der in der Lage ist, Videodaten aufzuzeichnen.

## Revendications

1. Dispositif de sortie (100) comprenant :
une unité de communication (160, 170) qui acquiert des informations d'identification à partir d'une pluralité d'appareils externes (101, 102), les informations d'identification identifiant des données enregistrées dans chacun de la pluralité d'appareils externes (101, 102) ;
un dispositif de commande (130) qui commande l'unité de communication (160, 170) ;
une unité de sortie (130, 150) qui délivre en sortie des informations représentées par les informations d'identification qui sont acquises par l'unité de communication (160, 170), et
une unité de fonctionnement (120) qui reçoit une instruction d'un utilisateur,
**caractérisé en ce que**,
pendant que l'unité de communication (160, 170) acquiert les informations d'identification à partir de chacun de la pluralité d'appareils externes (101, 102), l'unité de sortie (130, 150) est configurée pour mettre à jour des informations à délivrer en sortie à chaque fois que l'unité de communication (160, 170) termine une acquisition des informations d'identification à partir d'un nombre prédéterminé d'appareils externes (101, 102), les informations à délivrer en sortie étant représentées par des informations d'identification qui ont déjà été acquises à partir du nombre prédéterminé d'appareils externes,
dans lequel, lorsqu'une instruction pour reproduire les données enregistrées dans un du nombre prédéterminé d'appareils externes (101, 102) pour lesquels les informations d'identification ont déjà été acquises est reçue de l'utilisateur via l'unité de fonctionnement (120) pendant que l'unité de communication (160, 170) acquiert les informations d'identification à partir des appareils externes (101, 102), pour lesquels les informations d'identification ne sont pas complètement acquises, le dispositif de commande (130) commande l'unité de communication (160, 170) pour arrêter l'acquisition des informations d'identification.

2. Dispositif de sortie (100) selon la revendication 1, comprenant en outre une unité de tri qui trie les informations représentées par les informations d'identification selon une condition prédéterminée chaque fois que l'unité de communication (160, 170) termine l'acquisition des informations d'identification à partir de chacun de la pluralité d'appareils externes (101, 102), dans un cas où l'unité de communication (160, 170) acquiert les informations d'identification à partir de la pluralité d'appareils externes (101, 102),
dans lequel l'unité de sortie (130, 150) délivre en sortie les informations représentées par les informations d'identification après que les informations ont été triées par l'unité de tri.

3. Dispositif de sortie (100) selon la revendication 1 ou 2, dans lequel l'unité de communication (160, 170)
acquiert les informations d'identification à partir d'un de la pluralité d'appareils externes (101, 102) dans un cas où les données enregistrées dans ledit un de la pluralité d'appareils externes (101, 102) sont changées après une acquisition précédente des données, et
n'acquiert pas les informations d'identification à partir d'un de la pluralité d'appareils externes (101, 102) dans un cas où les données enregistrées dans ledit un de la pluralité d'appareils externes (101, 102) ne sont pas changées après l'acquisition précédente des données.

4. Dispositif de sortie (100) selon la revendication 1, dans lequel le dispositif de commande (130) commande l'unité de communication (160, 170) pour reprendre l'acquisition des informations d'identification après une fin de la reproduction des données sur la base de l'instruction.

5. Dispositif de sortie (100) selon l'une quelconque des revendications 1 à 4, dans lequel l'unité de sortie (130, 150) acquiert les informations d'identification à partir de la pluralité d'appareils externes (101, 102) périodiquement à un intervalle de temps prédéterminé, et
l'intervalle de temps prédéterminé est défini à différentes valeurs selon qu'une anomalie survient ou non dans une opération d'acquisition des informations d'identification.

6. Dispositif de sortie (100) selon l'une quelconque des revendications 1 à 5, dans lequel les informations d'identification représentent un titre d'un programme de diffusion enregistré dans un de la pluralité d'appareils externes (101, 102).

7. Dispositif de sortie (100) selon l'une quelconque des revendications 1 à 6, dans lequel le dispositif de sortie est un enregistreur vidéo capable d'enregistrer des données vidéo.
